(19) Europäisches Patentamt
European Patent Office
Office européen des brevets

(11) Veröffentlichungsnummer: **0 168 343 B1**

(12) **EUROPÄISCHE PATENTSCHRIFT**

(45) Veröffentlichungstag der Patentschrift: **02.05.91**

(51) Int. Cl.5: **C09B 56/00**, C08K 5/23

(21) Anmeldenummer: **85810270.0**

(22) Anmeldetag: **10.06.85**

(54) **Neue Metallkomplexe, Verfahren zu ihrer Herstellung ihre Verwendung zum Färben von hochmolekularem organischem Material.**

(30) Priorität: **15.06.84 CH 2915/84**

(43) Veröffentlichungstag der Anmeldung:
**15.01.86 Patentblatt 86/03**

(45) Bekanntmachung des Hinweises auf die Patenterteilung:
**02.05.91 Patentblatt 91/18**

(84) Benannte Vertragsstaaten:
**CH DE FR GB IT LI**

(56) Entgegenhaltungen:
**EP-A- 0 018 939**
**US-A- 3 389 132**
**US-A- 4 051 119**

**CHEMICAL ABSTRACTS, Band 101, Nr. 20, November 1984, Seite 86, Zusammenfassung Nr. 172984u, Columbus, Ohio, US; M. EL-KERSH et al.: "Spectral studies on some azohydrazone dyes", & INDIAN J. TEXT. RES. 1984, 9(2), 70-3**

(73) Patentinhaber: **CIBA-GEIGY AG**
**Klybeckstrasse 141**
**CH-4002 Basel(CH)**

(72) Erfinder: **Cseh, Georg, Dr.**
**Praz d'Avant 49**
**CH-1726 Posat(CH)**
Erfinder: **Lienhard, Paul, Dr.**
**Kirschgartenstrasse 14**
**CH-4402 Frenkendorf(CH)**

**EP 0 168 343 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue Azomethin-, Semicarbazon- und Hydrazon-Metallkomplexe, ihre Herstellung sowie ihre Verwendung zum Färben von hochmolekularem organischem Material.

Azomethin-Metallkomplexe aus Salicylaldehydderivaten und o-Hydroxyarylaminen sowie ihre Verwendung als Druckfarben sind bekannt und in der Japanischen Offenlegungsschrift Nr. 57-180660 beschrieben.

Auch Azomethinmetallkomplexe aus 8-Aminochinolin und o-Hydroxyaldehyden und ihre Verwendung als Farbstoffe für die Einfärbung von Polyolefinen sind bekannt und im US-Patent Nr. 3 389 132 beschrieben.

Gegenstand der vorliegenden Erfindung sind neue Uebergangsmetallkomplexe aus Liganden der Formeln I und II

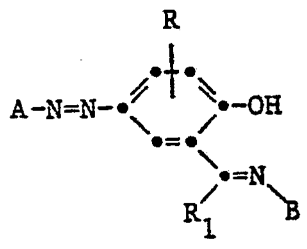

(I)

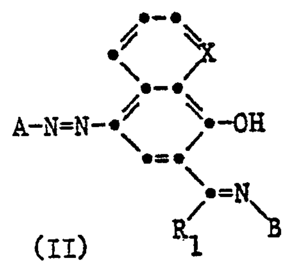

(II) ,

worin

A einen isocyclischen oder heteroroyclischen aromatischen Rest, R -H, Halogen, $C_1$-$C_4$-Alkyl oder $C_1$-$C_4$-Alkoxy, $R_1$ -H, $C_1$-$C_4$-Alkyl oder unsubstituiertes oder durch Halogen, $C_1$-$C_4$-Alkyl, $C_1$-$C_4$-Alkoxy, $-NO_2$, $-CONH_2$ , $-CONHR_2$ oder $C_2$-$C_5$-N-Alkylcarbamoyl substituiertes Phenyl, X -CH= oder -N= und

B -H, $C_1$-$C_4$-Alkyl, $-NHCONH_2$, -NHCONH-$C_1$-$C_4$-Alkyl, $-NHCONHR_2$, $-NHCSNH_2$, $-NHCSR_3$- -NHC-(NH)$NH_2$,-$NHR_2$- $-NHCOR_3$, $-NHSO_2R_3$ oder einen heterocyclischen aromatischen Rest bedeuten, wobei $R_2$ einen unsubstituierten oder durch Halogen, $-CF_3$, $C_1$-$C_4$-Alkyl, $C_1$-$C_4$-Alkoxy, $-NO_2$, -CN, $-CONH_2$, $-SO_2NH_2$ -CONH$C_{1-4}$-Alkyl, $-CONHC_6H_5$, $C_2$-$C_5$-Alkoxycarbonyl, Phenoxycarbonyl, $C_2$-$C_5$-N-Alkylcarbamoyl, $-NHCOC_6H_5$, $-SO_2NHC_1$-$C_4$-Alkyl oder $-SO_2NHC_6H_5$ substituiertes Phenyl, und $R_3$ unsubstituiertes oder durch Halogen, $C_1$-$C_4$-Alkyl, $C_1$-$C_4$-Alkoxy, $-NO_2$, $C_2$-$C_5$-N-Alkylcarbamoyl oder $-NHCOC_6H_5$ substituiertes Phenyl oder einen heterocyclischen aromatischen Rest bedeuten und das Uebergangsmetall ein zweifach positiv geladenes Metallion ist.

Als Uebergangsmetalle kommen insbesondere zweifach positiv geladene Metallionen, wie $Ni^{2+}$, $Cu^{2+}$,$Co^{2+}$, $Zn^{2+}$, $Mn^{2+}$, $Fe^{2+}$, $Cd^{2+}$ und $Pt^{2+}$, bevorzugt $Ni^{2+}$, $Cu^{2+}$, $Co^{2+}$ und $Zn^{2+}$, vor allem aber $Ni^{2+}$ und $Cu^{2+}$ in Frage. Man kann ferner Mischungen von Metallkomplexen verwenden, beispielsweise Mischungen von Ni- oder Zn- oder von Co- und Zn-Komplexen.

Auf 1 Metallion können 1 oder 2 Reste eines Liganden der Formeln I oder II entfallen, so dass 1:1- oder 1:2-Metallkomplexe mit neutralem Charakter vorliegen können.

Stellen R, $R_1$ und B $C_1$-$C_4$-Alkyl, R $C_1$-$c_4$-Alkoxy dar oder ist Phenyl als $R_1$, $R_2$ und $R_3$ durch $C_1$-$C_4$-Alkyl- oder $C_1$-$C_4$-Alkoxygruppen substituiert, so handelt es sich bei der Alkylgruppe beispielsweise um eine Methyl-, Aethyl-, n-Propyl-, Isopropyl-, n-Butyl-, Isobutyl- und tert.-Butylgruppe, bei der Alkoxygruppe beispielsweise um eine Methoxy-, Aethoxy-, n-Propoxy-, Isopropoxy-, n-Butoxy, Isobutoxy- und tert.-Butoxygruppe, insbesondere aber um ein Methyl- bzw. Methoxygruppe. Am Phenylrest können eine bis drei derartige Gruppen substituiert sein.

Bedeuten R Halogen oder sind $R_1$, $R_2$ und $R_3$ durch Halogen substituiertes Phenyl, so handelt es sich dabei um Fluor-, Chlor-, Brom- und Jodatome, insbesondere aber um Chloratome.

Bedeutet B -NHCONH$C_1$-$C_4$-Alkyl, so handelt es sich bei der Alkylgruppe beispielsweise um eine Methyl-, Aethyl-, Isopropyl- und tert.-Butylgruppe, insbesondere aber um eine Methylgruppe.

Ist Phenyl als $R_2$ mit -CONH-$C_1$-$C_4$-Alkyl substituiert, so handelt es sich bei der Alkylgruppe beispielsweise um eine Methyl-, Aethyl-, n-Propyl-, Isopropyl-, n-Butyl-, Isobutyl- und tert.-Butylgruppe, insbesondere aber um eine Methylgruppe.

Bedeutet $R_2$ durch $C_2$-$C_5$-Alkoxycarbonyl substituiertes Phenyl, so handelt es sich dabei um eine Methoxy-, Aethoxy-, Propoxy-, Isopropoxy-, Butoxy-, Isobutoxy- und tert.-Butoxy-carbonylgruppe, insbesondere aber um eine Methoxy- und Aethoxy-carbonylgruppe.

Ist Phenyl als $R_1$, $R_2$ und $R_3$ durch $C_2$-$C_5$-N-Alkylcarbamoyl substituiert, so handelt es sich dabei um

eine Acetylamino-, Propionylamino-, Butyrylamino-, Isobutyrylamino-, Valerylamino- und - Isovalerylaminogruppe, insbesondere aber um eine Acetylaminogruppe.

Ist Phenyl als $R_2$ durch $-SO_2NHC_1$-$C_4$-Alkyl substituiert, so handelt es sich bei der Alkylgruppe beispielsweise um eine Methyl-, Aethyl-, Propyl-, Isopropyl- und Butylgruppe.

Sind Phenyl als $R_2$ durch die Gruppen $-CONHC_6$-$H_5$, $-NHCOC_6H_5$ oder $-SO_2NHC_6H_5$ sowie Phenyl als $R_3$ durch die Gruppen $-NHCOC_6H_5$ substituiert, so können diese Gruppen noch weitere Substituenten wie Chloratome und/oder Methyl- und/oder Methoxygruppen aufweisen.

Stellen A und B einen heterocyclischen aromatischen Rest dar, so leitet sich dieser beispielsweise von folgenden heterocyclischen Aminen ab:

5-Amino-benzimidazolon, 5-Amino-1-methyl-benzimidazolon, 5-Amino-1-n-butyl-benzimidazolon, 5-Amino-1-phenyl-benzimidazolon, 5-Amino-1-p-chlorphenyl-benzimidazolon, 5-Amino-1-p-methylphenyl-benzimidazolon, 5-Amino-1-p-methoxyphenyl-benzimidazolon, 5-Amino-6-chlor-benzimid-azolon, 5-Amino-6-brom-benzimidazolon, 5-Amino-6-methyl-benzimidazolon, 5-Amino-6-methoxy-benzimidazolon, 6-Amino-benzoxazolon, 5-Amino-benzoxazolon, 5-Amino-7-chlor-benzoxazolon, 6-Amino-5-chlor-benzoxazolon, 6-amino-5-methyl-benzoxazolon, 6-Amino-5-chlor-benzthiazolon, 6-Amino-5-methyl-benzthiazolon- 6-Amino-chinazolon-4, 6-Amino-2-methyl-chinazolon-4, 6-Amino-2-methoxy-chinazolon-4, 6-Amino-7-chlor-2-methyl-chinazolon-4, 7-Amino-chinazolon-4, 2-(4'Aminophenyl)-chinazolon-4, 2-(3'-Aminophenyl)-chinazolon-4, 2-(4'-Amino-3'-methoxyphenyl)-chinazolon-4, 2-(4'-Amino-3'-chlorphenyl)-chinazolon-4, 2-(3'-Amino-4'-methylphenyl)-chinazolon-4, 6-Amino-2,4-dihydroxychinazolin, 7-Amino-phenmorpholon-3, 6-Amino-phenmorpholon-3, 7-Amino-6-chlor-phenmorpholon-3, 7-Amino-6-methyl-phenmorpholon-3, 7-Amino-6-methoxy-phenmorpholon-3, 6-Amino-chinolon-2, 6-Amino-4-methyl-chinolon-2, 7-Amino-4-methyl-chinolon-2, 7-Amino-4,6-dimethyl-chinolon-2, 6-Amino-7-chlor-4-methyl-chinolon-2, 7-Amino-4-methyl-6-methoxy-chinolon-2, 6-Amino-1,3-dihydroxy-isochinolin, 6-Amino-2,4-dihydroxy-chinolin, 6-Amino-2,3-dihydroxychinoxalin und 4-Amino-phthalsäureimid.

Bedeutet A einen isocyclischen aromatischen Rest, dann vorzugsweise einen mono- bis tetracyclischen, insbesondere mono- oder bicyclischen Rest, wie Phenyl, Diphenyl, Naphthyl und Anthrachinonyl, insbesondere aber Phenyl und Naphthyl.

Als Rest A verwendet man bevorzugt einen unsubstituierten oder durch Halogen, Phenyl, Phenylazo, Carboxy, $-CF_3$, $-NO_2$, -CN, $C_1$-$C_4$-Alkyl, $C_1$-$C_4$-Alkoxy, $-CONH_2$, $-SO_2NH_2$, $-CONHR_4$, $-COOR_5$, $-NHCOR_6$ oder $-SO_2NHR_4$ substituierten Phenylrest, wobei $R_4$ $C_1$-$C_4$-Alkyl oder unsubstituiertes oder durch Halogen, $-CF_3$, $C_1$-$C_4$-Alkyl, $C_1$-$C_4$-Alkoxy, $-NO_2$, -CN, $-CONH_2$, $-SO_2NH_2$, $-CONHC_1$-$C_4$-Alkyl, $-CONHC_6H_5$, $C_2$-$C_5$-Alkoxycarbonyl, $C_2$-$C_5$-N-Alkylcarbamoyl, $-NHCOC_6H_5$, $-SO_2NHC_1$-$C_4$-Alkyl oder $-SO_2NHC_6H_5$substituiertes Phenyl, $R_5$ $C_1$-$C_4$-Alkyl, unsubstituiertes oder durch Halogen oder $C_1$-$C_4$-Alkyl substituiertes Benzyl oder unsubstituiertes oder durch Halogen, $C_1$-$C_4$-Alkyl, $C_1$-$C_4$-Alkoxy, $C_2$-$C_5$-Alkoxycarbonyl oder $C_2$-$C_5$-N-Alkylcarbamoyl substituiertes Phenyl und $R_6$ $C_1$-$C_4$-Alkyl oder unsubstituiertes oder durch Halogen, $C_1$-$C_4$-Alkyl- $C_1$-$C_4$-Alkoxy, $-NO_2$ oder $C_2$-$C_5$-N-Alkylcarbamoyl substituiertes Phenyl darstellen.

Stellt $R_3$ im Rest $-NHCOR_3$, $-NHSO_2R_3$ oder $-NHCSR_3$ als B einen heterocyclischen aromatischen Rest dar, so leitet sich dieser beispielsweise von den folgenden heterocyclischen Carbonsäuren ab:

Furan-2-carbonsäure, Thiophen-2-carbonsäure, Pyrrol-2-carbonsäure, Pyridin-2-, -3- und -4-carbonsäure, Pyrazincarbonsäure, Indol-2-carbonsäure und Chinolin-4-carbonsäure, vor allem aber Pyridin-4-carbonsäure.

Von besonderem Interesse sind Metallkomplexe aus den Verbindungen der Formel I, worin R -H und $R_1$ -H, $-CH_3$ oder Phenyl bedeuten, A für den Rest der Formel III

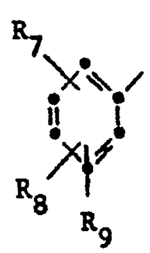

(III) .

steht, worin $R_7$ -H, -Cl, $CH_3$, $-OCH_3$, $-NO_2$, $-CF_3$, -CN, -COOH, $-CONH_2$, $-SO_2NH_2$, $-CONHR_{10}$, $-COOR_{11}$ oder $-NHCOR_{12}$, $R_8$ -H, -Cl, $-CH_3$, $-OCH_3$, $-CONH_2$ oder $-COOR_{11}$ und $R_9$ -H oder -Cl bedeuten, wobei $R_{10}$ $C_1$-$C_4$-Alkyl oder unsubstituiertes oder durch -Cl, $-CF_3$, $-CH_3$, $-OCH_3$, $-NO_2$, -CN, $-CONH_2$, $-SO_2NH_2$, $-CONHC_1$-$C_4$-Alkyl, $-CONHC_6H_5$, $C_2$-$C_5$-Alkoxycarbonyl, $C_2$-$C_5$-N-Alkylcarbamoyl, $-NHCOC_6H_5$, $-SO_2NHC_6H_5$ oder $-SO_2NHC_1$-$C_4$-Alkyl substituiertes Phenyl, $R_{11}$ $C_1$-$C_4$-Alkyl, Benzyl, unsubstituiertes oder

durch -Cl, $-CH_3$, $-OCH_3$, $C_2$-$C_5$-Alkoxycarbonyl oder $C_2$-$C_5$-N-Alkylcarbamoyl substituiertes Phenyl und $R_{12}$ $-CH_3$ oder unsubstituiertes oder durch -Cl, $-CH_3$, $-OCH_3$, $-NO_2$ oder $C_2$-$C_5$-N-Alkylcarbamoyl substituiertes Phenyl darstellen, und B -H, $-NHCONH_2$, $-NHCONHR_2$, $-NHCSNH_2$, $-NHC(NH)NH_2$, $-NHR_2$ oder $-NHCOR_3$ bedeutet, wobei $R_2$ unsubstituiertes oder durch -Cl, $-CF_3$, $C_1$-$C_4$-Alkyl, $C_1$-$C_4$-Alkoxy, $-NO_2$, -CN, $-CONH_2$, $-SO_2NH_2$, $-CONHC_1$-$C_4$-Alkyl, $-CONHC_6H_5$, $C_2$-$C_5$-Alkoxycarbonyl, Phenoxycarbonyl, $C_2$-$C_5$-N-Alkylcarbamoyl, $-NHCOC_6H_5$, $-SO_2NHC_1$-$C_4$-Alkyl oder $-SO_2NHC_6H_5$ substituiertes Phenyl, $R_3$ unsubstituiertes oder durch -Cl, $C_1$-$C_4$-Alkyl, $C_1$-$C_4$-Alkoxy, $-NO_2$, $C_{2-5}$-N-Alkylcarbamoyl oder $-NHCOC_6H_5$ substituiertes Phenyl, oder einen heterocyclischen aromatischen Rest bedeuten und das Metall Ni oder Cu ist.

Sind die verschiedenen Phenylreste als $R_4$, $R_5$, $R_6$ und $R_{10}$ in den oben angegebenen Bevorzugungen durch $C_1$-$C_4$-Alkyl oder $C_1$-$C_4$-Alkoxy substituiert oder stellen $R_4$, $R_5$, $R_6$ $R_{10}$ und $R_{11}$ $C_1$-$C_4$-Alkyl dar, so handelt es sich dabei um die gleiche Gruppen, die für die Ausdeutung der entsprechenden Symbole B, $R_1$, $R_2$, $R_3$ bereits aufgeführt wurden. Das gleiche gilt für die Definition der Gruppen $C_2$-$C_5$-Alkoxycarbonyl, $C_2$-$C_5$-N-Alkylcarbamoyl, $-CONH-C_1$-$C_4$-Alkyl und $-SO_2NH-C_1$-$C_4$-Alkyl.

Von ganz besonderem Interesse sind die Metallkomplexe aus den Verbindungen der Formel I, worin R -H und $R_1$ -H oder $-CH_3$ bedeuten, A für den Rest der Formel III steht, worin $R_7$ -H, -Cl, $-CH_3$, $-OCH_3$, $-NO_2$, -CN, $-CF_3$, -COOH, $-COOCH_3$, $-CONH_2$, $-CONHC_6H_5$, $-NHCOCH_3$ oder $-NHCOC_6H_5$, $R_8$ -H, -Cl, $CH_3$, $-OCH_3$, $-CONH_2$ oder $-COOCH_3$ und $R_9$ -H oder -Cl bedeuten, B für einen Rest der Formel $-NHCONH_2$ oder $-NHCOR_3$ steht, wobei $R_3$ unsubstituiertes oder durch ein oder zwei Chloratome und/oder eine oder zwei Methylgruppen, oder durch eine Methoxy-, Nitro- oder Acetylaminogruppe substituiertes Phenyl,oder 4-Pyridyl bedeutet und das Metall Ni oder Cu ist.

Die Verbindungen der Formeln I und II können nach an sich bekannten Verfahren hergestellt werden, so beispielsweise durch Diazotierung eines Amins der Formel $A-NH_2$ und anschliessende Kupplung der erhaltenen diazotierten Verbindung mit einem o-Hydroxybenzaldehyd bzw. o-Hydroxyketon der Formeln IV und V

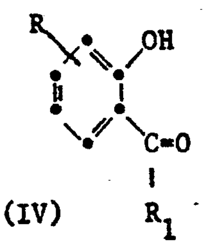

(IV)

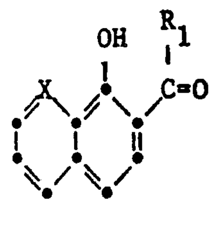

(V)

zur Azoverbindung der Formeln VI bzw. VII

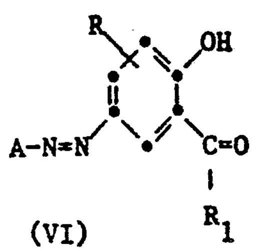

(VI)

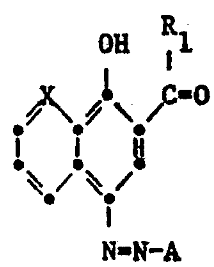

(VII).

Letztere werden mit einem Derivat der Formel $H_2N-B$ zum Liganden der Formeln I bzw. II und anschliessend mittels einer geeigneten Uebergangsmetallverbindung zu den entsprechenden Metallkomplexen umgesetzt.

Die Verbindungen der Formeln VI und VII erhält man auch durch Diazotierung eines Amins der Formel $A-NH_2$ und Kupplung der erhaltenen Diazoverbindung mit einem Derivat der Formeln VIII und IX

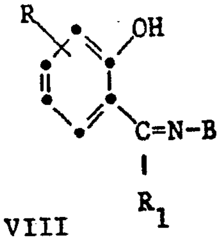

VIII

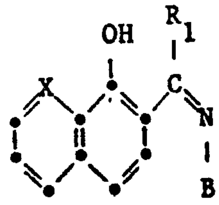

IX

In den Formeln IV bis IX haben A, B, X, R und $R_1$ die oben angegebene Bedeutung.

Die benötigten Zwischenprodukte der Formel A-$NH_2$, B-$NH_2$ und der Formeln IV und V stellen bekannte Verbindungen dar. Als Beispiele für Verbindungen der Formel A-$NH_2$ seien genannt:

Anilin, 2-Chlor-anilin, 3-Chlor-anilin, 4-Chlor-anilin, 2-Trifluormethyl-anilin, 3-Trifluormethyl-anilin, 2,3-Dichlor-anilin, 2,4-Dichlor-anilin, 2,5-Dichlor-anilin, 3,4-Dichlor-anilin, 3,5-Dichlor-anilin, 2-Chlor-5-trifluormethyl-anilin, 4-Chlor-2-trifluormethyl-anilin, 2,3,4-Trichlor-anilin, 2,4,5-Trichlor-anilin, 2-Methyl-anilin, 3-Methyl-anilin, 4-Methyl-anilin, 2-Methyl-3-chlor-anilin, 2-Methyl-5-chlor-anilin, 4-Methyl-2-chlor-anilin, 4-Methyl-3-chlor-anilin, 5-Methyl-2-chlor-anilin, 2-Methoxy-anilin, 3-Methoxy-anilin, 4-Methoxy-anilin, 2-Methoxy-3-chlor-anilin, 2-Methoxy-4-chlor-anilin, 2-Methoxy-5-chlor-anilin, 2-Cyano-anilin, 2-Nitro-anilin, 3-Nitro-anilin, 4-Nitro-anilin, 2-Nitro-4-chlor-anilin, 2-Nitro-5-chlor-anilin, 2-Nitro-4-trifluormethyl-anilin, 3-Nitro-4-chlor-anilin, 3-Nitro-6-chlor-anilin, 4-Nitro-2-chlor-anilin, 4-Nitro-3-chlor-anilin, 4-Nitro-2-brom-anilin, 2-Nitro-4-methyl-anilin, 2-Nitro-4-methoxy-anilin, 3-Nitro-6-methyl-anilin, 2-Nitro-6-methoxy-anilin, 3-Nitro-4-methyl-anilin, 3-Nitro-4-methoxy-anilin, 4-Nitro-2-methyl-anilin, 4-Nitro-2-methoxy-anilin, 4-Chlor-2,5-dimethyl-anilin, 4-Nitro-2,5-dichlor-anilin,2-Methyl-4,5-dichlor-anilin, 2-Methoxy-4-nitro-5-chlor-anilin, 2,5-Dimethoxy-4-chlor-anilin, 3-Acetylamino-anilin, 4-Acetylamino-anilin, 2-Chlor-5-acetylamino-anilin, 2-Methoxy-5-acetylamino-anilin, 2-Methyl-5-acetylamino-anilin, 3-Amino-4-chlor-benzoesäureäthylester, 3-Amino-4-methyl-benzoesäureäthylester, 3-Amino-benzoesäureamid, 4-Amino-benzoesäureamid, 3-Amino-4-chlor-benzoesäureamid, 3-Amino-4-methyl-benzoesäureamid, 3-Amino-4-methoxy-benzoesäureamid, 3-Amino-4-chlor-benzoesäureanilid, 3-Amino-4-methyl-benzoesäureanilid, 3-Amino-4-methoxy-benzoesäureanilid, 3-Amino-benzolsulfonsäureamid, 4-Amino-benzolsulfonsäureamid, 5-Amino-benzimidazolon, 5-Amino-6-chlor-benzimidazolon, 7-Amino-4-methyl-chinolon-2, 7-Amino-6-chlor-4-methyl-chinolon-2, 7-Amino-4,6-dimethyl-chinolon-2, 7-Amino-chinazolon-4, 6-Amino-phenmorpholon-3, 6-Amino-benzoxazin-2,4-dion, 1-Amino-anthrachinon, 2-Amino-anthrachinon, 1-Amino-naphthalin, 2-Amino-naphthalin, 4-Amino-azobenzol, Amino-terephthalsäuredimethylester, 5-Amino-isophthalsäuredimethylester, 1-Amino- 2-methyl-anthrachinon, 1-Amino-4-acetylamino-anthrachinon und 1-Amino-4-benzoylamino-anthrachinon.

Beispiele für Verbindungen der Formeln IV und V seien genannt:

2-Hydroxy-benzaldehyd, 2-Hydroxy-3-chlor-benzaldehyd, 2-Hydroxy-4-chlor-benzaldehyd, 2-Hydroxy-3-methyl-benzaldehyd, 2-Hydroxy-4-methyl-benzaldehyd, 2-Hydroxy-6-methyl-benzaldehyd, 2-Hydroxy-3-methoxy-benzaldehyd, 2-Hydroxy-4-methoxy-benzaldehyd, 2-Hydroxy-acetophenon, 2-Hydroxy-3-chlor-acetophenon, 2-Hydroxy-4-chlor-acetophenon, 2-Hydroxy-3-methyl-acetophenon, 2-Hydroxy-4-methyl-acetophenon, 2-Hydroxy-3-methoxy-acetophenon, 2-Hydroxy-4-methoxy-acetophenon, 2-Hydroxy-benzophenon, 2-Hydroxy-3-chlor-benzophenon, 2-Hydroxy-4-chlor-benzophenon, 2-Hydroxy-3-methyl-benzophenon, 2-Hydroxy-4-methyl-benzophenon, 2-Hydroxy-3-methoxy-benzophenon, 2-Hydroxy-4-methoxy-benzophenon, 2-Hydroxy-4,4'-dichlor-benzophenon, 2-Hydroxy-3,4'-dichlor-benzophenon, 2-Hydroxy-3,6-dimethylbenzaldehyd, 1-Hydroxy-2-naphthylaldehyd, 1-Hydroxy-2-acetylnaphthalin, 1-Hydroxy-2-benzoyl-naphthalin und 8-Hydroxy-7-formyl-chinolin.

Für die Metallisierung werden die entsprechenden Metallsalze wie die Chloride, Sulfate, Nitrate oder Acetate eingesetzt, beispielsweise Nickel-, Kupfer-, Kobalt- oder Zinkacetat, oder die entsprechenden Chloride, Sulfate, Nitrate oder Phosphate. Es kann auch mit Koordinationsverbindungen der genannten Uebergangsmetalle wie beispielsweise Nickel-acetylacetonat oder Kupfer-tetraminosulfat gearbeitet werden. Dabei werden zweckmässig organische Lösungsmittel verwendet.

Als Lösungsmittel seien beispielsweise genannt: Methanol, Aethanol, Buthanol, Aethylenglykol, Aethylenglykolmonomethyläther, Aethylenglykolmonoäthyläther, Dimethylformamid, Nitrobenzol, Dichlorbenzol, Toluol und Eisessig. Gemische von organischen Lösungsmitteln, von organischen Lösungsmitteln mit Wasser,sowie Wasser allein können hierfür auch verwendet werden.

Die Reaktion geht bei erhöhter Temperatur vor sich, vorzugsweise zwischen 50 °C und dem Siedepunkt des verwendeten Lösungsmittels bzw. Lösungsmittelgemisches.

Die so erhaltenen Metallkomplexe der Formeln I und II lassen sich leicht durch Filtration isolieren. Allfällige Verunreinigungen können durch Auswaschen entfernt werden.

Je nach Art ihrer Substituenten und des zu färbenden Polymeren können die Verbindungen der Formeln I und II als polymerlösliche Farbstoffe oder insbesondere als Pigmente verwendet werden. Im letzteren Falle ist es vorteilhaft, die bei der Synthese anfallenden Produkte in eine feindisperse Form überzuführen. Dies kann auf verschiedene Weise geschehen, so beispielsweise durch Mahlen oder Kneten, zweckmässig in Gegenwart von Mahlhilfsmitteln, wie anorganischen oder organischen Salzen mit oder ohne Zusatz organischer Lösungsmittel. Nach dem Mahlen werden die Hilfsmittel wie üblich entfernt, lösliche anorganische Salze z.B. mit Wasser und wasserunlösliche organische Lösungsmittel beispielsweise durch Wasserdampfdestillation.

Es kann sich als zweckmässig erweisen, die Metallkomplexe der Formeln I und II mit organischen Lösungsmitteln, vorzugsweise mit solchen, die über 100 °C sieden, nachzubehandeln.

Als besonders geeignet hierfür erweisen sich durch Halogenatome, Alkyl- oder Nitrogruppen substituierte Benzole, wie Xylole, Chlorbenzol, o-Dichlorbenzol, Toluol oder Nitrobenzol, Alkohole, wie Isopropanol oder Isobutanol, ferner Ketone, wie Cyclohexanon, Aether wie Aethylenglykolmonomethyl- oder -monoäthyläther, Amide, wie Dimethylformamid oder N-Methyl-pyrrolidon, sowie Dimethylsulfoxyd, Sulfolan oder Wasser allein, gegebenenfalls unter Druck. Man kann die Nachbehandlung auch in Wasser in Gegenwart von organischen Lösungsmitteln und/oder mit Zusatz von oberflächenaktiven Substanzen oder aliphatischen Aminen oder in flüssigem Ammoniak durchführen.

Durch die oben erwähnten Nachbehandlungen lassen sich die Metallkomplexe der Formeln I und II bezüglich ihrer Korngrösse und ihrer Pigmenteigenschaften wie Farbstärke, Migrations-, Licht- und Wetterbeständigkeit sowie Deckkraft bzw. Transparenz steuern bzw. optimieren.

Je nach Verwendungszweck erweist es sich als vorteilhaft, die Pigmente als Toner oder in Form von Präparaten zu verwenden.

Das erfindungsgemäss zu färbende hochmolekulare organische Material kann natürlicher oder künstlicher Herkunft sein. Es kann sich z.B. um Naturharze oder trocknende Oele, Kautschuk oder Casein oder um abgewandelte Naturstoffe, wie Chlorkautschuk, ölmodifizierte Alkydharze, Viscose, um Celluloseäther oder Ester, wie Celluloseacetat, Cellulosepropionat, Celluloseacetobutyrat oder Nitrocellulose handeln, insbesondere aber um vollsynthetische organische Polymere (Duroplaste und Thermoplaste), wie sie durch Polymerisation, Polykondensation oder Polyaddition erhalten werden. Aus der Klasse der Polymerisationsharze seien in erster Linie genannt, Polyolefine, wie Polyäthylen, Polypropylen,oder Polyisobutylen, ferner substituierte Polyolefine, wie Polymerisate aus Vinylchlorid, Vinylacetat, Styrol, Acrylnitril,der Acrlysäure- und/oder Methacrylsäureester oder Butadien, sowie Kopolymerisate der erwähnten Monomeren, insbesondere ABS oder EVA.

Aus der Reihe der Polyadditionsharze und Polykondensationsharze seien die Kondensationsprodukte von Formaldehyd mit Phenolen, die sogenannten Phenoplaste, und die Kondensationsprodukte von Formaldehyd mit Harnstoff, Thioharnstoff und Melamin, die sogenannten Aminoplaste,die als Lackharze verwendeten Polyester, und zwar sowohl gesättigte, wie z.B. Alkydharze, als auch ungesättigte, wie beispielsweise Maleinatharze, ferner die linearen Polyester und Polyamide oder Silikone genannt.

Die erwähnten hochmolekularen Verbindungen können einzeln oder in Gemischen, als plastische Massen oder Schmelzen,die gegebenenfalls zu Fasern versponnen werden können, vorliegen.

Sie können auch im polymerisierten Zustand in gelöster Form als Filmbildner oder Bindemittel für Lacke oder Druckfarben vorliegen, wie z.B. Leinölfirnis, Nitrocellulose, Alkydharze, Melaminharze und Harnstoff-Formaldehydharze oder Acrylharze.

Die Pigmentierung der hochmolekularen, organischen Substanzen mit den Verbindungen der Formeln I und/oder II erfolgt beispielsweise derart, dass man ein solches Pigment gegebenenfalls in Form von Masterbatches, diesen Substraten unter Verwendung von Walzwerken, Misch- oder Mahlapparaten zumischt. Das pigmentierte Material wird hierauf nach an sich bekannten Verfahren wie Kalandrieren, Pressen, Strangpressen, Streichen, Verspinnen, Giessen oder durch Spritzguss in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können im erfindungsgemässen Verfahren vor oder nach der Einverleibung des Pigmentfarbstoffes in die Polymeren eingearbeitet werden. Es ist ferner möglich, zwecks Erzielung verschiedener Farbtöne den hochmolekularen, organischen Stoffen neben den Verbindungen der Formeln I und II noch Füllstoffe bzw. andere farbgebende Bestandteile wie Weiss-, Bunt- oder Schwarzpigmente in beliebigen Mengen zuzufügen.

Zum Pigmentieren von Lacken und Druckfarben werden die hochmolekularen organischen Materialien

und die Metallkomplexe der Formeln I und II gegebenenfalls zusammen mit Zusatzstoffen wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Werden die erfindungsgemäss zu verwendenden Metallkomplexe in Kunststoffe eingearbeitet, so können sie diese gegen die Einflüsse von Licht und Wetter stabilisieren. Dies ist von besonderer Bedeutung, wenn die gefärbten Polymeren, insbesondere Polypropylen, zu Fasern verarbeitet werden.

Werden die erfindungsgemäss zu verwendenden Metallkomplexe in lichtstabilisiertes hochmolekulares organisches Material eingearbeitet, so wird in der Regel dessen Lichtstabilität nicht beeinträchtigt. Gegebenenfalls lässt sich auch eine synergistische Verbesserung der Lichtstabilität beobachten.

Die erhaltenen Färbungen enthalten vorzugsweise 0,01-20 Gew.% einer Verbindung der Formeln I oder II, beispielsweise in Kunststoffen, Fasern, Lacken und Drucken, und zeichnen sich durch gute Dispergierbarkeit,Ueberlackier-, Migrations-, Hitze-, Licht- und Wetterbeständigkeit, gute Farbstärke sowie durch einen guten Glanz aus.

Wenn die Verbindungen der Formeln I und/oder II in den angewandten Polymeren gelöst vorliegen, zeichnen sie sich ebenfalls durch reinen Farbton, gute Farbstärke und Lichtechtheit aus.

In den nachfolgenden Beispielen bedeuten die Prozente Gewichtsprozente.

Beispiel 1: 35,2 g 5-(2',5'-Dichlor-phenylazo)-2-hydroxy-benzaldehydsemicarbazon werden in 350 ml Aethylcellosolve bei 70 °C suspendiert und mit einer Lösung von 21 g Kupfer-II-acetat in 550 ml Aethylcellosolve versetzt. Das erhaltene Gemisch wird bei 100-110 °C während 5 Stunden gerührt, darauf das Produkt abfiltriert und anschliessend mit Aethylcellosolve, dann Isopropanol und schliesslich mit Wasser gewaschen. Nach dem Trocknen im Vakuum bei 70-80 °C erhält man 25,3 g eines gelben Pulvers der nachstehenden Formel

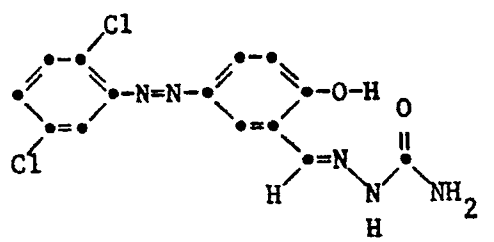
,

als 1:1 Kupferkomplex und mit folgender Mikroanalyse ($C_{14}H_9Cl_2N_5O_2 \cdot Cu$):

| | C | H | Cl | N | Cu |
|---|---|---|---|---|---|
| Berechnet (in %): | 40,65 | 2,19 | 17,14 | 16,93 | 15,36 |
| Gefunden (in %): | 40,00 | 2,46 | 16,63 | 16,37 | 15,20 |

Beispiele 2-12: Analog dem Beispiel 1 erhält man weitere gelbe 1:1 bzw. 1:2 Metallkomplexe, wenn man 2-Hydroxy-benzaldehyd mit dem in Kolonne II der nachstehenden Tabelle 1 angegebenen, diazotierten Amin umsetzt, das entstandene 5-Arylazo-2-hydroxybenzaldehydderivat mit Semicarbazid kondensiert und anschliessend das erhaltene Semicarbazonderivat der Formel X mit Nickel- oder Kupferacetat in den entsprechenden Metallkomplex gemäss Kolonne IV überführt.

Tabelle 1:

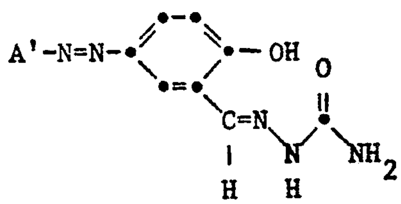

(X)

| Beispiel No. | II | A' | IV (*) |
|---|---|---|---|
| 2 | 2,5-Dichlor-anilin | 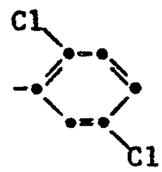 | 1:2-Ni |
| 3 | 2-Chlor-anilin | 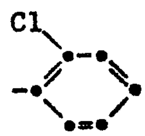 | 1:1-Cu |
| 4 | 2-Chlor-anilin | 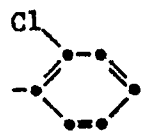 | 1:2-Ni |
| 5 | 4-Chlor-anilin | 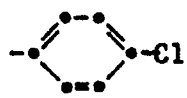 | 1:1-Cu |
| 6 | 4-Chlor-anilin | 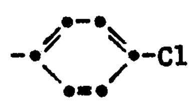 | 1:2-Ni |

Tabelle 1: (Fortsetzung)

| Beispiel No. | II | A' | IV (*) |
|---|---|---|---|
| 7 | 2-Methoxy-4-nitro-anilin | 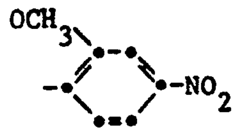 | 1:1-Cu |
| 8 | 2-Methoxy-4-nitro-anilin | 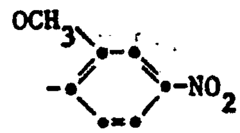 | 1:2-Ni |
| 9 | 3-Acetylamino-anilin | 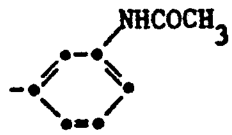 | 1:1-Cu |
| 10 | 3-Acetylamino-anilin | 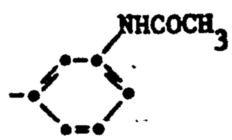 | 1:2-Ni |
| 11 | 5-Amino-benzimidazolon-2 | 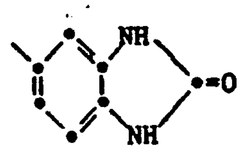 | 1:1-Cu |
| 12 | 5-Amino-benzimidazolon-2 | 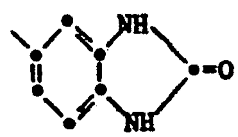 | 1:2-Ni |

(* : Verhältnis Metall zum Ligand der Formel X)

Beispiel 13: 16,7 g 5-(4'-Chlor-phenylazo)-2-hydroxy-benzaldehydthiosemicarbazon werden in 200 ml Aethylcellosolve bei 70 ° C suspendiert und mit einer Lösung von 13,6 g Nickel-II-acetat•$4H_2O$ in 250 ml Aethylcellosolve versetzt. Das erhaltene Gemisch wird bei 100-110 ° C während 5 Stunden gerührt, darauf das Produkt abfiltriert und mit Aethylcellosolve, dann Isopropanol und schliesslich mit Wasser gewaschen. Nach dem Trocknen im Vakuum bei 70-80 ° C erhält man 16,9 g eines gelben Pulvers der nachstehenden Formel

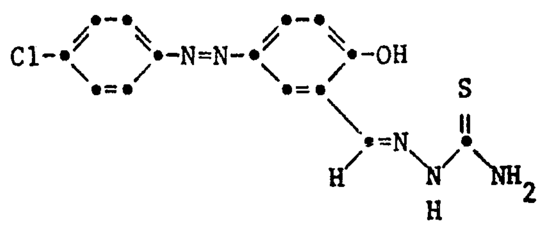

als 1:1 Nickelkomplex.

Das Produkt verliert beim Erhitzen auf 100-140 °C 1% Wasser und weist dann folgende Verbrennungsanalyse auf:

$C_{14}H_{10}ClN_5O_2S \cdot Ni$:

| | C | H | Cl | N | S | Ni |
|---|---|---|---|---|---|---|
| Berechnet (in %) : | 42,6 | 2,7 | 9,0 | 17,8 | 8,2 | 14,9 |
| Gefunden (in %) : | 42,9 | 2,9 | 8,7 | 17,3 | 7,3 | 14,6 |

Beispiele 14 bis 24: Analog dem Beispiel 13 erhält man weitere gelbe 1:1-Metallkomplexe, wenn man 2-Hydroxybenzaldehyd mit dem in der Kolonne II der nachstehenden Tabelle 2 angegebenen, diazotierten Amin kuppelt, das entstandene 5-Arylazo-2-hydroxy-benzaldehyd mit Thiosemicarbazid kondensiert und anschliessend das erhaltene Thiosemicarbazonderivat der Formel XI mit Nickel- oder Kupferacetat zu dem Metallkomplex gemäss Kolonne IV überführt.

**Tabelle 2:**

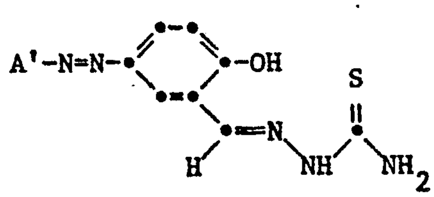

(XI)

| Beispiel No. | II | A' | IV (*) |
|---|---|---|---|
| 14 | 4-Chlor-anilin | 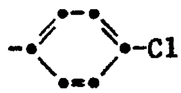 | 1:1-Cu |
| 15 | 2-Chlor-anilin | 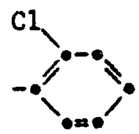 | 1:1-Cu |
| 16 | 2-Chlor-anilin | 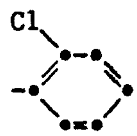 | 1:1-Ni |
| 17 | 2,5-Dichlor-anilin | 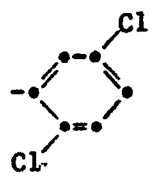 | 1:1-Cu |
| 18 | 2,5-Dichlor-anilin | 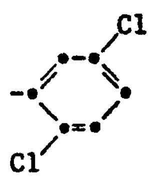 | 1:1-Ni |
| 19 | 2-Methoxy-4-nitroanilin | 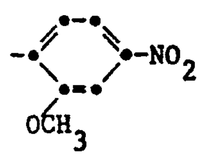 | 1:1-Cu |
| 20 | 2-Methoxy-4-nitroanilin | 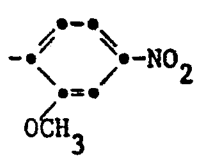 | 1:1-Ni |

Tabelle 2: (Fortsetzung)

| Beispiel No. | II | A' | IV (*) |
|---|---|---|---|
| 21 | 3-Acetylamino-anilin | 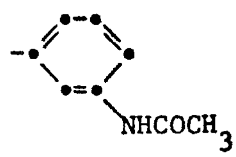 | 1:1-Cu |
| 22 | 3-Acetylamino-anilin | 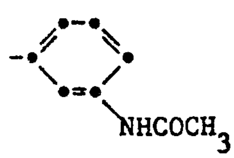 | 1:1-Ni |
| 23 | 5-Amino-benz-imidazolon-2 | 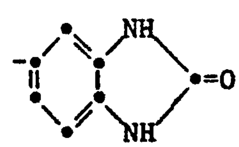 | 1:1-Cu |
| 24 | 5-Amino-benz-imidazolon-2 | 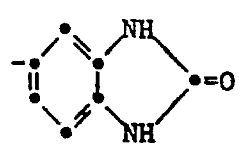 | 1:1-Ni |

**(* : Verhältnis Metall zum Ligand der Formel XI )**

Beispiel 25: 19,7 g 5-(2'-Chlor-phenylazo)-2-oxy-benzaldehyd-4"-phenyl-semicarbazon werden in 300 ml Aethylcellosolve bei 70 °C suspendiert und mit 13,6 g Nickel-II-Acetat• $4H_2O$ gelöst in 250 ml Aethylcellosolve versetzt. Das erhaltene Gemisch wird bei 100-110 °C während 5 Stunden gerührt, darauf das Produkt abfiltriert und mit Aethylcellosolve, dann Isopropanol und schliesslich mit Wasser gewaschen. Nach dem Trocknen im Vakuum bei 70-80 °C erhält man 19,5 g eines gelben Pulvers der nachstehenden Formel

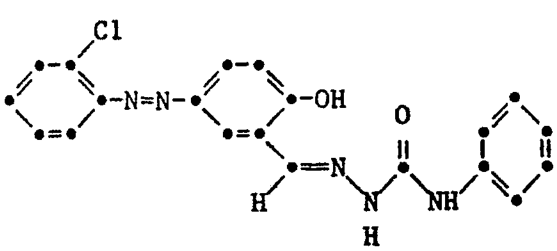

**als 1:1 Nickelkomplex.**

Beispiele 26 bis 36: Analog dem Beispiel 25 erhält man weitere gelbe 1:1-Metallkomplexe, wenn man

2-Hydroxy-benzaldehyd mit dem in der Kolonne II der nachstehenden Tabelle 3 angegebenen, diazotierten Amin kuppelt, das entstandene 5-Arylazo-2-hydroxy-benzaldehyd mit 4-Phenyl-semicarbazid kondensiert und anschliessend das erhaltene Semicarbazon der Formel XII mit Nickel- oder Kupferacetat in den Metallkomplex gemäss Kolonne IV überführt.

Tabelle 3:

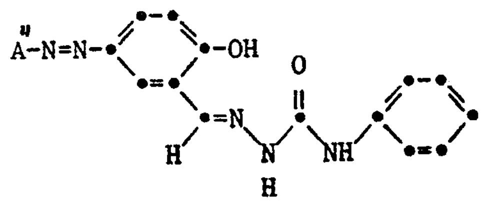

(XII)

| Beispiel No. | II | A" | IV * |
|---|---|---|---|
| 26 | 2-Chlor-anilin | 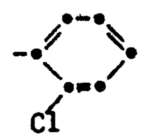 | 1:1-Cu |
| 27 | 4-Chlor-anilin | 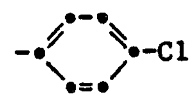 | 1:1-Ni |
| 28 | 4-Chlor-anilin | 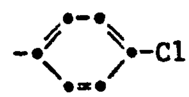 | 1:1-Cu |

Tabelle 3: (Fortsetzung):

| Beispiel No. | II | A* | IV * |
|---|---|---|---|
| 29 | 2,5-Dichlor-anilin | 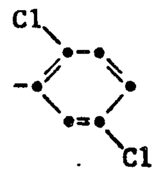 | 1:1-Ni |
| 30 | 2,5-Dichlor-anilin | 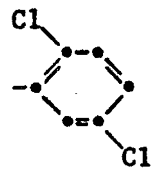 | 1:1-Cu |
| 31 | 2-Methoxy-4-nitro-anilin | 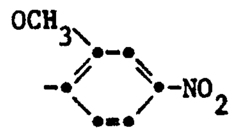 | 1:1-Cu |
| 32 | 2-Methoxy-4-nitro-anilin | 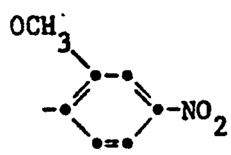 | 1:1-Ni |
| 33 | 3-Acetylamino-anilin | 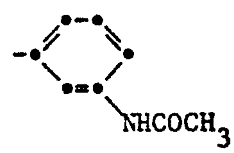 | 1:1-Cu |
| 34 | 3-Acetylamino-anilin | 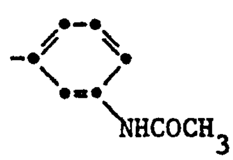 | 1:1-Ni |
| 35 | 5-Amino-benz-imidazolon-2 | 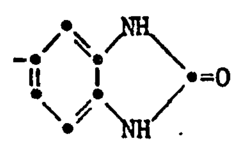 | 1:1-Cu |
| 36 | 5-Amino-benz-imidazolon-2 | 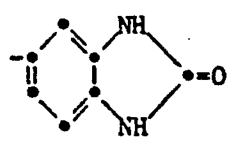 | 1:1-Ni |

(* Verhältnis Metall zum Ligand der Formel XII)

Beispiel 37: 19,5 g 5-(4'-Nitro-phenylazo)-2-hydroxy-benzaldehydbenzoylhydrazon werden in 250 ml Aethylcellosolve bei 70° C suspendiert und mit einer Lösung von 13,6 g Nickel-II-acetat•$4H_2O$ in 250 ml Aethylcellosolve versetzt. Das erhaltene Gemisch wird bei 100-110° C während 5 Stunden gerührt, darauf das Produkt abfiltriert und mit Aethylcellosolve, dann Isopropanol und schliesslich mit Wasser gewaschen. Nach dem Trocknen im Vakuum bei 70-80° C erhält man 19,4 g eines roten Pulvers der nachstehenden Formel

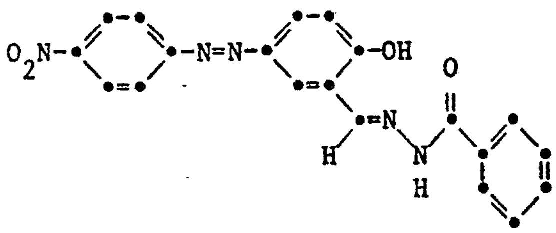

als 1:2-Nickelkomplex.

Das Produkt enthält Wasser und zeigt nach scharfem Trocknen folgende Mikroanalyse:
$C_{20}H_{13}N_5O_4$•Ni:

| | C | H | N | Ni |
|---|---|---|---|---|
| Berechnet (in %) : | 57,8 | 2,9 | 16,9 | 7,1 |
| Gefunden (in %) : | 56,8 | 3,5 | 16,7 | 7,0 |

Beispiele 38 bis 70: Analog dem Beispiel 37 erhält man weitere 1:1- oder 1:2-Metallkomplexe, wenn man 2-Hydroxybenzaldehyd mit dem in der Kolonne II der nachstehenden Tabelle 4 angegebenen, diazotierten Amin kuppelt, das entstandene 5-Arylazo-2-hydroxybenzaldehyd mit Benzoesäurehydrazid kondensiert und anschliessend das erhaltene Hydrazonderivate der Formel XIII

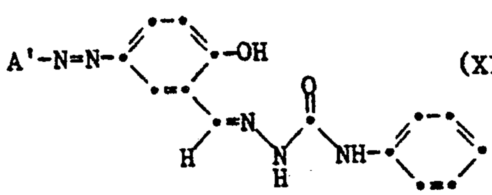

(XIII)

[A' = Rest des gemäss Kolonne II der Tabelle 4 angegebenen, diazotierten Amins] mit Nickel- oder Kupferacetat in den Metallkomplex gemäss Kolonne III überführt.

Kolonne IV gibt den Farbton in PVC-Folien (0,2% Pigmentkonz.) an.

Tabelle 4:

| Beispiel No. | II | III(*) | IV * |
|---|---|---|---|
| 38 | 4-Nitro-anilin | 1:1-Cu | rotstichig-braun |
| 39 | Anilin | 1:1-Cu | grün |
| 40 | Anilin | 1:2-Ni | gelb |
| 41 | 2-Chlor-anilin | 1:1-Cu | gelb |
| 42 | 2-Chlor-anilin | 1:2-Ni | gelb |
| 43 | 3-Chlor-anilin | 1:1-Cu | gelb |
| 44 | 3-Chlor-anilin | 1:2-Ni | gelb |
| 45 | 2,5-Dichlor-anilin | 1:1-Cu | rotstichig-gelb |
| 46 | 2,5-Dichlor-anilin | 1:2-Ni | rotstichig-gelb |
| 47 | 2,4-Dichlor-anilin | 1:1-Cu | grünstichig-gelb |
| 48 | 2,4-Dichlor-anilin | 1:2-Ni | rotstichig-gelb |
| 49 | 3,5-Dichlor-anilin | 1:1-Cu | grünstichig-gelb |
| 50 | 3,5-Dichlor-anilin | 1:2-Ni | rotstichig-gelb |
| 51 | 2-Chlor-5-trifluormethyl-anilin | 1:1-Cu | grünstichig-gelb |
| 52 | 2-Chlor-5-trifluormethyl-anilin | 1:2-Ni | rotstichig-gelb |
| 53 | 3-Acetylamino-anilin | 1:1-Cu | grünstichig-gelb |
| 54 | 3-Acetylamino-anilin | 1:2-Ni | rotstichig-gelb |
| 55 | 2-Chlor-4-nitro-anilin | 1:1-Cu | rotstichig-braun |

Tabelle 4: (Fortsetzung)

| Beispiel No. | II | III (*) | IV |
|---|---|---|---|
| 56 | 2-Chlor-4-nitro-anilin | 1:2-Ni | bordeaux |
| 57 | 2-Methoxy-4-nitro-anilin | 1:1-Cu | rotstichig-braun |
| 58 | 2-Methoxy-4-nitro-anilin | 1:2-Ni | bordeaux |
| 59 | 2,5-Dichlor-4-nitro-anilin | 1:1-Cu | rotstichig-braun |
| 60 | 2,5-Dichlor-4-nitro-anilin | 1:2-Ni | bordeaux |
| 61 | 3-Amino-4-chlor-benzoesäure-äthylester | 1:1-Cu | grünstichig-gelb |
| 62 | 3-Amino-4-chlor-benzoesäure-äthylester | 1:2-Ni | rotstichig gelb |
| 63 | 3-Amino-4-chlor-benzoesäure-amid | 1:1-Cu | grünstichig-gelb |
| 64 | 3-Amino-4-chlor-benzoesäure-amid | 1:2-Ni | rotstichig gelb |
| 65 | 3-Amino-4-methoxy-benzoesäure-anilid | 1:1-Cu | grünstichig-gelb |
| 66 | 3-Amino-4-methoxy-benzoesäure-anilid | 1:2-Ni | rotstichig gelb |
| 67 | 5-Amino-benzimidazolon-2 | 1:1-Cu | grünstichig-gelb |
| 68 | 5-Amino-benzimidazolon-2 | 1:1-Ni | rotstichig-gelb |
| 69 | 7-Amino-4-methyl-chinolon-2 | 1:1-Cu | grünstichig-gelb |
| 70 | 7-Amino-4-methyl-chinolon-2 | 1:1-Ni | rotstichig-gelb |

(*: Verhältnis Metall zum Ligand der Formel XIII)

Beispiel 71: 21,3 g 5-(4'-Methyl-chinolon-2'-yl-7'-azo)-2-hydroxybenzaldehyd-isonicotinsäurehydrazon werden in 250 ml Aethylcellosolve bei 70° C suspendiert und mit einer Lösung von 10,9 g Kupfer-II-acetat•$H_2O$ in 400 ml Aethylcellosolve versetzt. Das erhaltene Gemisch wird bei 100-110° C während 5

Stunden gerührt, darauf das Produkt abfiltriert und mit Aethylcellosolve, dann Isopropanol und schliesslich Wasser gewaschen. Nach dem Trocknen im Vakuum bei 70-80 °C erhält man 20,8 g eines braunen Pulvers der nachstehenden Formel

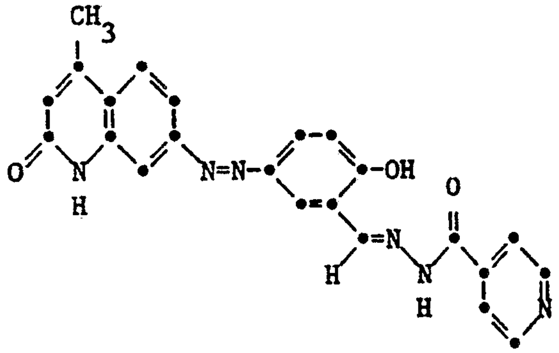

**als 1:1-Kupferkomplex.**

Das Produkt enthält Kristallwasser und zeigt folgende Mikroanalyse:

| | C | H | N | Cu |
|---|---|---|---|---|
| Gefunden (in %) : | 53,4 | 4,0 | 15,9 | 12,9 , |

was folgendes Atomverhältnis C : H : N : Cu = 22:19,6:5,6:1,0 ergibt.

Beispiele 72 bis 103: Analog dem Beispiel 71 erhält man weitere 1:1-Metallkomplexe, wenn man 2-Hydroxybenzaldehyd mit dem in der Kolonne II der nachstehenden Tabelle 5 angegebenen, diazotierten Amin kuppelt, das entstandene 5-Arylazo-2-hydroxy-benzaldehyd mit Isonicotinsäurehydrazid kondensiert und anschliessend das Produkt der Formel XIV

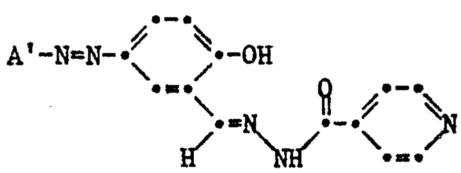

(XIV)

[A' = Rest des gemäss Kolonne II der Tabelle 5 angegebenen, diazotierten Amins]
mit Nickel- oder Kupferacetat in den Metallkomplex gemäss Kolonne III überführt. Kolonne IV gibt den Farbton einer Weich-PVC-Folie (0,2% Pigmentkonzentration) an.

Tabelle 5:

| Beispiel Nr. | II | III | IV |
|---|---|---|---|
| 72 | 7-Amino-4-methyl-chinolon-2 | Ni | braunstichig-rot |
| 73 | Anilin | Cu | gelb |
| 74 | Anilin | Ni | rotstichig gelb |
| 75 | 2-Chlor-anilin | Cu | gelb |
| 76 | 2-Chlor-anilin | Ni | rotstichig-gelb |
| 77 | 3-Chlor-anilin | Cu | gelb |
| 78 | 3-Chlor-anilin | Ni | rotstichig-gelb |
| 79 | 4-Chlor-anilin | Cu | gelb |
| 80 | 4-Chlor-anilin | Ni | rotstichig-gelb |
| 81 | 2,5-Dichlor-anilin | Cu | gelb |
| 82 | 2,5-Dichlor-anilin | Ni | rotstichig gelb |
| 83 | 3,5-Dichlor-anilin | Cu | gelb |
| 84 | 3,5-Dichlor-anilin | Ni | rotstichig-gelb |
| 85 | 2-Chlor-5-trifluormethyl-anilin | Cu | grünstichig-gelb |
| 86 | 2-Chlor-5-trifluormethyl-anilin | Ni | rotstichig-gelb |
| 87 | 3-Acetylamino-anilin | Cu | grünstichig-gelb |
| 88 | 3-Acetylamino-anilin | Ni | rotstichig-gelb |
| 89 | 4-Nitro-anilin | Cu | braunstichig-gelb |

Tabelle 5: (Fortsetzung)

| Beispiel Nr. | II | III | IV |
|---|---|---|---|
| 90 | 4-Nitro-anilin | Ni | bordeaux |
| 91 | 2-Methoxy-4-nitro-anilin | Cu | braun |
| 92 | 2-Methoxy-4-nitro-anilin | Ni | braun |
| 93 | 2-Chlor-4-nitro-anilin | Cu | braun |
| 94 | 2-Chlor-4-nitro-anilin | Ni | braun |
| 95 | 2,5-Dichlor-4-nitro-anilin | Cu | braun |
| 96 | 3-Amino-4-chlor-benzoesäure-amid | Cu | gelb |
| 97 | 3-Amino-4-chlor-benzoesäure-amid | Ni | rotstichig gelb |
| 98 | 3-Amino-4-methoxy-benzoesäure-anilid | Cu | grünstichig gelb |
| 99 | 3-Amino-4-methoxy-benzoesäure-anilid | Ni | rotstichig-gelb |
| 100 | 3-Amino-4-chlor-benzoesäure-äthylester | Cu | grünstichig-gelb |
| 101 | 3-Amino-4-chlor-benzoesäure-äthylester | Ni | rotstichig-gelb |
| 102 | 5-Amino-benzimidazolon-2 | Cu | braun |
| 103 | 5-Amino-benzimidazolon-2 | Ni | beige |

Beispiel 104: 65 g stabilisiertes Polyvinylchlorid, 35 g Dioctylphthalat und 0,2 g feinverteilter 1:1-Kupferkomplex aus dem Benzoylhydrazon der nachstehenden Formel

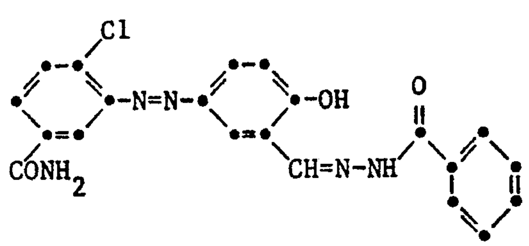

werden miteinander verrührt und auf einem Zweiwalzenkalander 7 Minuten bei 160 °C gewalzt. Man erhält

eine gelb gefärbte Folie von sehr guter Licht-und Migrationsbeständigkeit.

Herstellung der feinverteilten Form des oben angegebenen 1:1-Kupferkomplexes: 25 g 1:1-Kupferkomplex, 100 g fein gemahlenes Natriumchlorid und 30 g Diacetonalkohol werden zusammen während 5 Stunden unter Kühlung in einem Laboratoriumskneter geknetet. Die erhaltene Mischung wird in 4000 ml Wasser gegossen und die entstandene Suspension abfiltriert. Man wäscht das isolierte Pigment mit Wasser und trocknet es im Vakuum bei 80° C.

Beispiel 105: 10 g Titandioxyd und 2 g 1:1-Kupferkomplex aus dem Semicarbazon der nachstehenden Formel

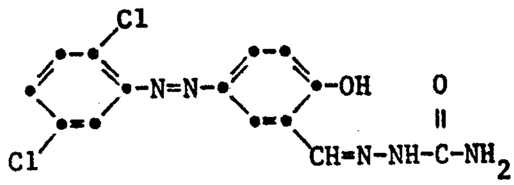

werden mit 88 g einer Mischung von 26,4 g Kokosalkydharz, 24,0 g Melamin-Formaldehydharz (50% Festkörpergehalt), 8,8 g Aethylenglykolmonomethyläther und 28,8 g Xylol während 48 Stunden in einer Kugelmühle vermahlen. Wird dieser Lack auf eine Aluminiumfolie gespritzt,30Minuten bei Raumtemperatur vorgetrocknet und dann während 30 Minuten bei 120° C eingebrannt, dann erhält man eine gelbe Lackierung, die sich bei guter Farbstärke durch eine sehr gute Ueberlackier-, Licht- und Wetterbeständigkeit auszeichnet.

Beispiel 106: 4 g des fein verteilten Pigmentes der nachstenden Formel

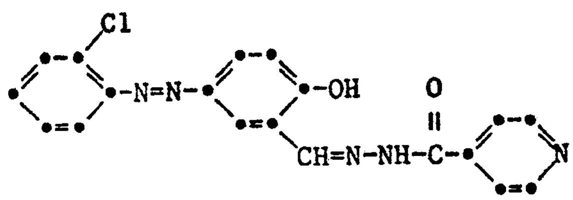

als 1:1-Nickelkomplex.

werden in 20 g Lösungsmittel der folgenden Zusammensetzung eingerührt: 50 g Solvesso 150®[(Gemisch aromatischer Kohlenwasserstoffe), 15 g Butylacetat, 5 g Exkin II® (Verlaufsmittel auf Ketoximbasis), 25 g Methyl-isobutylketon und 5 g Silikonöl (1% in Solvesso 150®)]. Wenn die vollständige Feinverteilung erreicht ist (je nach Art des Rührens in ca. 15-60 Minuten), werden die Bindemittel zugesetzt, nämlich 48,3 g Baycryl L 530® (Acrylharz, 61% in Xylol/Butanol 3:1) und 23,7 g Maprenal TTX® (Melaminharz, 55% in Butanol). Nach kurzem Homogenisieren wird der Lack nach üblichen Methoden wie Spritzen und Tauchen oder speziell zur kontinuierlichen Beschichtung von Metallblechen im "Coil-Coating"-Verfahren appliziert und eingebrannt (Einbrennen: 30 Minuten bei 130° C). Die erhaltenen gelben Lackierungen zeichnen sich durch sehr guten Verlauf, hohen Glanz und gute Feinverteilung des Pigmentes, sowie durch eine gute Wetterbeständigkeit aus.

Beispiel 107: 2 g 1:1-Nickelkomplex aus dem Hydrazon der nachstehenden Formel

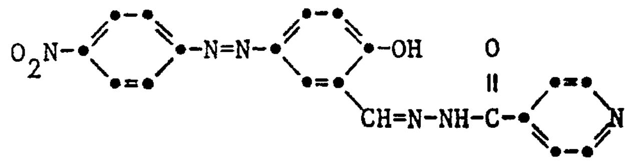

werden mit 36 g Tonerdehydrat, 60 g Leinölfirnis von mittlerer Viskosität und 2 g Kobaltlinoleat auf dem Dreiwalzenstuhl angerieben. Die mit der entstandenen Farbpaste erzeugten gelben Drucke sind farbstark und gut lichtbeständig.

Beispiel 108: Ein zur Faserherstellung geeignetes Polypropylengranulat wird mit 2,5% eines Pigmentpräparates, enthaltend 40% 1:1-Nickelkomplex aus dem Thiosemicarbazon der nachstehenden Formel

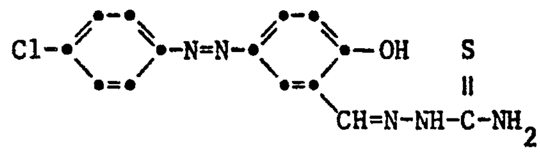

gründlich gemischt. Die Mischung wird auf einer Schmelzspinnanlage bei 240-260 °C zu Fäden versponnen, die anschliessend auf einer Streckzwirnanlage im Verhältnis 1:4 verstreckt und aufgespult werden. Man erhält eine kräftige gelbe Färbung, die sich durch gute Licht-, Wäsche-, Trockenreinigungs-, Abgas- und Peroxidbleichechtheit auszeichnet. Bei sonst analoger Arbeitsweise erhält man ebenfalls sehr echte, gelbe Ausfärbungen, wenn man anstelle von Polypropylen-Polycaprolactamgranulat verwendet, und die Mischung bei 260-290 °C zu Fäden verspinnt.

Das oben eingesetzte Präparat wird wie folgt hergestellt:
40 g des gelben Pigmentes, 60 g Mg-Behenat und 500 g Natriumchlorid werden in einem Pulvermischer gründlich gemischt. Diese Mischung wird mit einer Laborknetmaschine bei 130 °C bearbeitet. Das erhaltene Präparat wird mit Wasser vermahlen, filtriert, salzfrei gewaschen, getrocknet und pulverisiert.

Beispiele 109-142: Verfährt man analog dem Beispiel 71 bzw. 37, verwendet aber einen der in den Tabellen 6 bis 9 aufgeführten Liganden, metallisiert diese mit Kupfer- oder Nickelacetat, so erhält man Metallkomplexe der Formeln XV-XVIII, welche ebenfalls echte gelbe Ausfärbungen in Weich-PVC (0,2% Pigmentkonzentration) ergeben.

Tabelle 6:

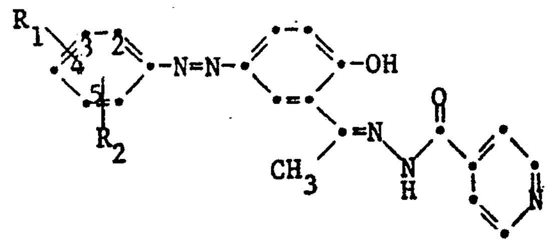

(XV)

als 1:1-M-Komplex

| Bsp. Nr. | $R_1$ | $R_2$ | M | Nuance |
|---|---|---|---|---|
| 109 | 2-Cl | H | Cu | gelb |
| 110 | 2-Cl | H | Ni | gelb |
| 111 | 2-Cl | 5-Cl | Cu | gelb |
| 112 | 2-Cl | 5-Cl | Ni | gelb |
| 113 | H | $4-NO_2$ | Cu | gelb |
| 114 | H | $4-NO_2$ | Ni | gelb |
| 115 | 2-Cl | $4-COOCH_3$ | Cu | gelb |
| 116 | 2-Cl | $5-COOCH_3$ | Ni | gelb |
| 117 | 2-Cl | $5-CONH_2$ | Cu | gelb |
| 118 | 2-Cl | $5-CONH_2$ | Ni | gelb |

Tabelle 7:

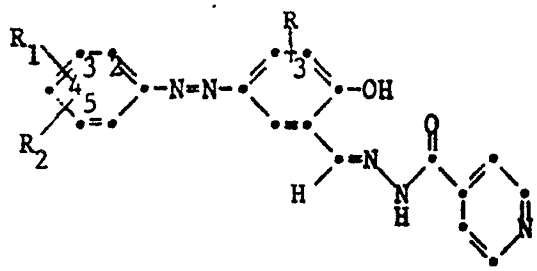

(XVI)

als 1:1-M-Komplex

| Bsp. Nr. | R | $R_1$ | $R_2$ | M | Nuance |
|---|---|---|---|---|---|
| 119 | H | 2-CN | H | Cu | gelb |
| 120 | H | 2-CN | H | Ni | gelb |
| 121 | H | H | 4-COOH | Cu | gelb |
| 122 | H | H | 4-COOH | Ni | gelb |
| 123 | H | $2\text{-}COOCH_3$ | $5\text{-}COOCH_3$ | Cu | gelb |
| 124 | H | $2\text{-}COOCH_3$ | $5\text{-}COOCH_3$ | Ni | gelb |
| 125 | H | H | 4-NHCO- 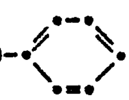 | Cu | gelb |
| 126 | H | H | 4-NHCO- 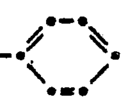 | Ni | gelb |
| 127 | $3\text{-}OCH_3$ | 2-Cl | 5-Cl | Cu | gelb |
| 128 | $3\text{-}OCH_3$ | 2-Cl | 5-Cl | Ni | gelb |

Tabelle 8:

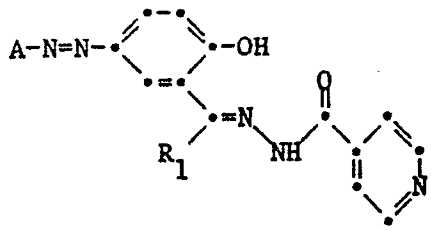

(XVII)

als 1:1-M-Komplex

| Bsp. Nr. | $R_1$ | A | M | Nuance |
|---|---|---|---|---|
| 129 | H | 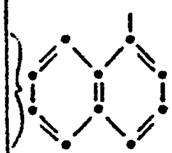 | Cu | gelb |
| 130 | H | | Ni | gelb |
| 131 | H | 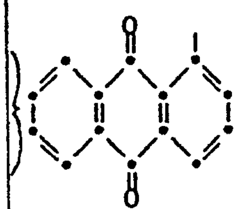 | Cu | gelb |
| 132 | H | | Ni | gelb |

Tabelle 9:

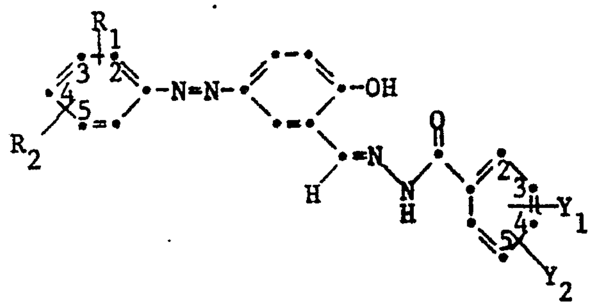

(XVIII)

als 1:X-Metallkomplex

| Bsp. Nr. | $R_1$ | $R_2$ | $Y_1$ | $Y_2$ | M | 1:X* | Nuance in PVC |
|---|---|---|---|---|---|---|---|
| 133 | 2-Cl | 4-Cl | 4-Cl | H | Cu | 1:1 | gelb |
| 134 | 2-Cl | 4-Cl | 4-Cl | H | Ni | 1:2 | gelb |
| 135 | 2-Cl | H | 2-Cl | 4-Cl | Cu | 1:1 | gelb |
| 136 | 2-Cl | H | 2-Cl | 4-Cl | Ni | 1:2 | gelb |
| 137 | 2-Cl | 5-Cl | $3-CH_3$ | H | Cu | 1:1 | gelb |
| 138 | 2-Cl | 5-Cl | $3-CH_3$ | H | Ni | 1:2 | gelb |
| 139 | 2-Cl | 5-Cl | $4-OCH_3$ | H | Cu | 1:1 | gelb |
| 140 | 2-Cl | 5-Cl | $4-OCH_3$ | H | Ni | 1:2 | gelb |
| 141 | 4-Cl | H | $4-NO_2$ | H | Cu | 1:1 | gelb |
| 142 | 4-Cl | H | $4-NO_2$ | H | Ni | 1:2 | gelb |

(* Verhältnis Metall zum Ligand der Formel XVIII).

## Ansprüche

1. Uebergangsmetallkomplexe aus Liganden der Formeln I und II

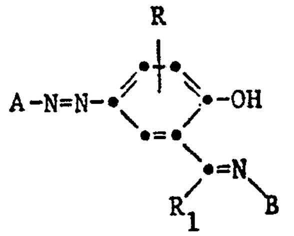

(I)

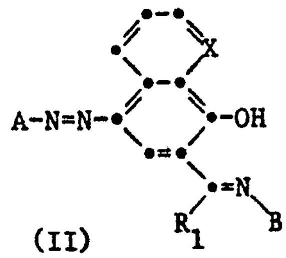

(II)

worin

A einen isocyclischen oder heterocyclischen aromatischen Rest, R -H, Halogen, $C_1$-$C_4$-Alkyl oder $C_1$-$C_4$-Alkoxy, $R_1$ -H, $C_1$-$C_4$-Alkyl oder unsubstituiertes oder durch Halogen, $C_1$-$C_4$-Alkyl, $C_1$-$C_4$-Alkoxy, $-NO_2$, $-CONH_2$, $-CONHR_2$ oder $C_2$-$C_5$-N-Alkylcarbamoyl substituiertes Phenyl, X -CH= oder -N= und B -H, $C_1$-$C_4$-Alkyl, $-NHCONH_2$, -NHCONHC$_1$-$C_4$-Alkyl, $-NHCONHR_2$, $-NHCSNH_2$, $-NHCSR_3$, $-NHC(NH)NH_2$, $-NHR_2$, $-NHCOR_3$, $-NHSO_2R_3$, oder einen heterocyclischen aromatischen Rest bedeuten, wobei $R_2$ einen unsubstituierten oder durch Halogen, $-CF_3$, $C_1$-$C_4$-Alkyl, $C_1$-$C_4$-Alkoxy, $NO_2$, -CN, $-CONH_2$, $-SO_2NH_2$, -CONHC$_1$-$C_4$-Alkyl, $-CONHC_6H_5$, $C_2$-$C_5$-Alkoxycarbonyl, Phenoxycarbonyl, $C_2$-$C_5$-N-Alkylcarbamoyl, $-NHCOC_6H_5$, -SO$_2$NHC$_1$-$C_4$-Alkyl oder $-SO_2NHC_6H_5$ substituiertes Phenyl, und $R_3$ unsubstituiertes oder durch Halogen, $C_1$-$C_4$-Alkyl, $C_1$-$C_4$-Alkoxy, $-NO_2$, $C_2$-$C_5$-N-Alkylcarbamoyl oder $-NHCOC_6H_5$ substituiertes Phenyl, oder einen heterocyclischen aromatischen Rest bedeuten, und das Uebergangsmetall ein zweifach positiv geladenes Metallion ist.

**2.** Uebergangsmetallkomplexe gemäss Anspruch 1, worin das Metall Nickel, Kupfer, Kobalt oder Zink ist.

**3.** Uebergangsmetallkomplexe gemäss Anspruch 1, worin in der Formel I A unsubstituiertes oder durch Halogen, Phenyl, Phenylazo, Carboxy, $-CF_3$, $-NO_2$, -CN, $C_1$-$C_4$-Alkyl, $C_1$-$C_4$-Alkoxy, $-CONH_2$, $-SO_2NH_2$, $-CONHR_4$, $-COOR_5$, $-NHCOR_6$ oder $-SO_2NHR_4$ substituiertes Phenyl ist, wobei $R_4$ $C_1$-$C_4$-Alkyl oder unsubstituiertes oder durch Halogen, $-CF_3$, $C_1$-$C_4$-Alkyl, $C_1$-$C_4$-Alkoxy, $NO_2$, -CN, $CONH_2$,$-SO_2NH_2$, -CONHC$_1$-$C_4$-Alkyl, $-CONHC_6H_5$, $C_2$-$C_5$-Alkoxycarbonyl, $C_2$-$C_5$-N-Alkylcarbamoyl, $-NHCOC_6H_5$, -SO$_2$NHC$_1$-$C_4$-Alkyl oder $-SO_2NHC_6H_5$ substituiertes Phenyl, $R_5$ $C_1$-$C_4$-Alkyl, unsubstituiertes oder durch Halogen oder $C_1$-$C_4$-Alkyl substituiertes Benzyl oder unsubstituiertes oder durch Halogen, $C_1$-$C_4$-Alkyl, $C_1$-$C_4$-Alkoxy, $C_2$-$C_5$-Alkoxycarbonyl oder $C_2$-$C_5$-N-Alkylcarbamoyl substituiertes Phenyl und $R_6$ $C_1$-$C_4$-Alkyl oder unsubstituiertes oder durch Halogen, $C_1$-$C_4$-Alkyl, $C_1$-$C_4$-Alkoxy, $-NO_2$ oder $C_2$-$C_5$-N-Alkylcarbamoyl substituiertes Phenyl darstellen, und B, R, $R_1$ und das Metall die im Anspruch 1 angegebene Bedeutung haben.

**4.** Uebergangsmetallkomplexe gemäss Anspruch 1, worin in der Formel I R -H und $R_1$ -H, $-CH_3$ oder Phenyl bedeuten, A für den Rest der Formel III

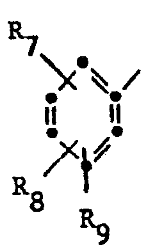

(III)

steht, worin $R_7$ -H, -Cl, $-CH_3$, $OCH_3$, $-NO_2$, $-CF_3$,-CN, -COOH, $-CONH_2$, $-SO_2NH_2$, $-CONHR_{10}$, $-COOR_{11}$ oder $-NHCOR_{12}$, $R_8$ -H, -Cl, $CH_3$, $-OCH_3$, $-CONH_2$ oder $-COOR_{11}$ und $R_9$ -H oder -Cl bedeuten, wobei $R_{10}$ $C_1$-$C_4$-Alkyl oder unsubstituiertes oder durch -Cl, $-CF_3$, $-CH_3$, $-OCH_3$, $-NO_2$, -CN, $-CONH_2$, $-SO_2NH_2$, -CONHC$_1$-$C_4$-Alkyl, $-CONHC_6H_5$, $C_2$-$C_5$-Alkoxycarbonyl, $C_2$-$C_5$-N-Alkylcarbamoyl, $-NHCOC_6H_5$, $-SO_2NHC_6H_5$ oder -SO$_2$NHC$_1$-$C_4$-Alkyl substituiertes Phenyl, $R_{11}$ $C_1$-$C_4$-Alkyl, Benzyl, unsubstituiertes oder durch -Cl, $-CH_3$, $-OCH_3$, $C_2$-$C_5$-Alkoxycarbonyloder $C_2$-$C_5$-N-Alkylcarbamoyl substituiertes Phenyl und $R_{12}$ $-CH_3$ oder unsubstituiertes oder durch -Cl $-CH_3$, $-OCH_3$, $-NO_2$ oder $C_2$-$C_5$-N-

Alkylcarbamoyl substituiertes Phenyl darstellen,
B -H, -$NHCONH_2$, -$NHCONHR_2$, -$NHCSNH_2$, -NHC(NH)$NH_2$, -$NHR_2$ oder -$NHCOR_3$ bedeutet, wobei $R_2$ einen unsubstituierten oder durch -Cl, -$CF_3$, $C_1$-$C_4$-Alkyl, $C_1$-$C_4$-Alkoxy, -$NO_2$,-CN, -$CONH_2$, -$SO_2NH_2$, -$CONHC_1$-$C_4$-Alkyl, -$CONHC_6H_5$, $C_2H_5$-Alkoxycarbonyl, Phenoxycarbonyl, $C_2$-$C_5$-N-Alkylcarbamoyl, -$NHCOC_6H_5$, -$SO_2NHC_1$-$C_4$-Alkyl oder -$SO_2NHC_6H_5$ substituiertes Phenyl, $R_3$ unsubstituiertes oder durch -Cl, $C_1$-$C_4$-Alkyl, $C_1$-$C_4$-Alkoxy, -$NO_2$, $C_2$-$C_5$-N-Alkylcarbamoyl oder -$NHCOC_6H_5$ substituiertes Phenyl oder einen heterocyclischen aromatischen Rest bedeuten, und das Uebergangsmetall Nickel oder Kupfer ist.

5. Uebergangsmetallkomplexe der Formel I gemäss Anspruch 4, worin R -H, $R_1$ -H oder -$CH_3$ bedeuten, A für den Rest der Formel III steht, worin $R_7$ -H, -Cl, -$CH_3$, -$OCH_3$, -$NO_2$, -CN, -$CF_3$, -COOH, -$COOCH_3$, -$CONH_2$, -$CONHC_6H_5$, -$NHCOCH_3$ oder -$NHCOC_6H_5$, $R_8$ -H, -Cl, $CH_3$, -$OCH_3$, -$CONH_2$ oder -$COOCH_3$ und $R_9$ -H oder -Cl bedeuten, B für einen Rest der Formel -$NHCONH_2$ oder -$NHCOR_3$ steht, wobei $R_3$ unsubstituiertes oder durch ein oder zwei Chloratome und/oder eine oder zwei Methylgruppen, oder durch eine Methoxy-, Nitro- oder Acetylaminogruppe substituiertes Phenyl,oder 4-Pyridyl bedeutet und das Metall Nickel oder Kupfer ist.

6. Verfahren zum Färben von hochmolekularem organischem Material, dadurch gekennzeichnet, dass ein Uebergangsmetallkomplex aus den Verbindungen der Formeln I und/oder II gemäss Anspruch 1 verwendet wird.

7. Hochmolekulares organisches Material enthaltend einen Uebergangsmetallkomplex aus den Verbindungen der Formeln I und/oder II gemäss Anspruch 1.

## Claims

1. A transition metal complex of ligands of the formulae I and II

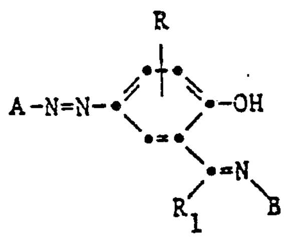

(I)

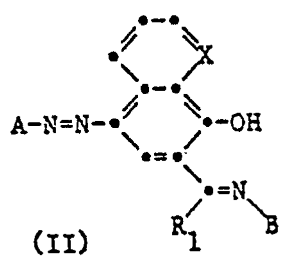

(II) ,

in which A is an isocyclic or heterocyclic aromatic radical, R is -H, halogen, $C_1$-$C_4$alkyl or $C_1$-$C_4$alkoxy, $R_1$ is -H, $C_1$-$C_4$alkyl or phenyl which is unsubstituted or substituted by halogen, $C_1$-$C_4$alkyl, $C_1$-$C_4$-alkoxy, -$NO_2$, -$CONH_2$, $CONHR_2$ or $C_2$-$C_5$-N-alkylcarbamoyl, X is -CH= or -N= and B is -H, $C_1$-$C_4$alkyl, -$NHCONH_2$, -NHCONH-$C_1$-$C_4$alkyl, -$NHCONHR_2$, -$NHCSNH_2$, -$NHCSR_3$, -NHC(NH)$NH_2$, -$NHR_2$, -$NHCOR_3$, -$NHSO_2R_3$, or a heterocyclic aromatic radical, $R_2$ being phenyl which is unsubstituted or substituted by halogen, -$CF_3$, $C_1$-$C_4$alkyl, $C_1$-$C_4$-alkoxy, -$NO_2$, -CN, -$CONH_2$, -$SO_2NH_2$ -$CONHC_1$-C-$_4$alkyl, -$CONHC_6H_3$, $C_2$-$C_5$alkoxycarbonyl, phenoxycarbonyl, $C_2$-$C_3$-N-alkylcarbamoyl, -$NHCOC_6H_5$ or -$SO_2NHC_1$-$C_4$-alkyl or -$SO_2NHC_6H_5$ and $R_3$ being phenyl which is unsubstituted or substituted by halogen, $C_1$-$C_4$alkyl, $C_1$-$C_4$alkoxy, -$NO_2$, $C_2$-$C_5$-N-alkylcarbamoyl or -$NHCOC_6H_5$ or being a heterocyclic aromatic radical, and the transition metal is a doubly positively charged metal ion.

2. A transition metal complex according to claim 1, in which the metal is nickel, copper, cobalt or zinc.

3. A transition metal complex according to claim 1, in which, in the formula I, A is phenyl which is unsubstituted or substituted by halogen, phenyl, phenylazo, carboxy, -$CF_3$, -$NO_2$, -CN, $C_1$-$C_4$alkyl, $C_1$-$C_4$alkoxy, -$CONH_2$, -$SO_2NH_2$, -$CONHR_4$, -$COOR_5$, -$NHCOR_6$ or -$SO_2NHR_4$, $R_4$ being $C_1$-$C_4$alkyl or phenyl which is unsubstituted or substituted by halogen, -$CF_3$, $C_1$-$C_4$alkyl, $C_1$-$C_4$alkoxy, -$NO_2$, -CN,

$-CONH_2$, $-SO_2NH_2$, $-CONHC_1$-$C_4$alkyl, $-CONHC_6H_5$, $C_2$-$C_5$alkoxycarbonyl, $C_2$-$C_5$-N-alkylcarbamoyl, $-NHCOC_6H_5$, $-SO_2NHC_1$-$C_4$alkyl or $-SO_2NHC_6H_5$, $R_5$ being $C_1$-$C_4$alkyl, benzyl which is unsubstituted or substituted by halogen or $C_1$-$C_4$alkyl or phenyl which is unsubstituted or substituted by halogen, $C_1$-$C_4$alkyl, $C_1$-$C_4$alkoxy, $C_2$-$C_5$alkoxycarbonyl or $C_2$-$C_5$-N-alkylcarbamoyl and $R_6$ being $C_1$-$C_4$alkyl or phenyl which is unsubstituted or substituted by halogen, $C_1$-$C_4$alkyl, $C_1$-$C_4$alkoxy, $-NO_2$, or $C_2$-$C_5$-N-alkylcarbamoyl, and B, R, $R_1$ and the metal are as defined in claim 1.

4. A transition metal complex according to claim 1, in which, in the formula I, R is -H, $R_1$ is -H,-$CH_3$ or phenyl, A is the radical of the formula III

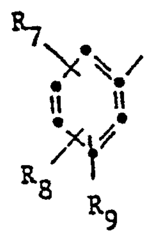

(III)

in which $R_7$ is -H, -Cl, $-CH_3$, $-OCH_3$, -NO, $-CF_3$, -CN, -COOH, $-CONH_2$, $-SO_2NH_2$, $-CONHR_{10}$, $-COOR_{11}$ or $-NHCOR_{12}$, $R_8$ is -H, -Cl, $-CH_3$, $-OCH_3$, $-CONH_2$ or $-COOR_{11}$ and $R_9$ is -H or -Cl, $R_{10}$ being $C_1$-$C_4$alkyl or phenyl which is unsubstituted or substituted by -Cl, $-CF_3$, $-CH_3$, $-OCH_3$, $-NO_2$, -CN, $-CONH_2$, $-SO_2NH_2$, $-CONHC_1$-$C_4$alkyl, $-CONHC_6H_5$, $C_2$-$C_5$alkoxycarbonyl, $C_2$-$C_5$-N-alkylcarbamoyl, $-NHCOC_6H_5$, $-SO_2NHC_6H_5$ or $-SO_2NHC_1$-$C_4$alkyl, $R_{11}$ being $C_1$-$C_4$alkyl, benzyl or phenyl which is unsubstituted or substituted by -Cl, $-CH_3$, $-OCH_3$, $C_2$-$C_5$alkoxycarbonyl or $C_2$-$C_5$-N-alkylcarbamoyl and $R_{12}$ being $-CH_3$ or phenyl which is unsubstituted or substituted by -Cl, $-CH_3$, $-OCH_3$, $-NO_2$ or $C_2$-$C_5$-N-alkylcarbamoyl, and B is -H, $-NHCONH_2$, $-NHCONHR_2$, $-NHCSNH_2$, $-NHC(NH)NH_2$, $-NHR_2$ or $-NHCOR_3$, $R_2$ being phenyl which is unsubstituted or substituted by -Cl, $-CF_3$, $C_1$-$C_4$alkyl, $C_1$-$C_4$alkoxy, $-NO_2$, -CN, $-CONH_2$, $-SO_2NH_2$, $-CONHC_1$-$C_4$alkyl, $-CONHC_6H_5$, $C_2$-$C_5$alkoxycarbonyl, phenoxycarbonyl, $C_2$-$C_5$-N-alkylcarbamoyl, $-NHCOC_6H_5$, $-SO_2NHC_1$-$C_4$alkyl or $-SO_2NHC_6H_5$, $R_3$ being phenyl which is unsubstituted or substituted by -Cl, $C_1$-$C_4$alkyl, $C_1$-$C_4$alkoxy, $-NO_2$, $C_2$-$C_5$-N-alkylcarbamoyl or $-NHCOC_6H_5$, or is a heterocyclic aromatic radical and the transition metal is nickel or copper.

5. A transition metal complex of the formula I according to claim 4, in which R is -H, $R_1$ is -H or $-CH_3$, A is the radical of the formula III in which $R_7$ is -H, -Cl, $-CH_3$, $-OCH_3$, $-NO_2$, -CN, $-CF_3$- -COOH, $-COOCH_3$, $-CONH_2$, $-CONHC_6H_5$, $-NHCOCH_3$ or $-NHCOC_6H_5$, $R_8$ is -H, -Cl, $-CH_3$, $-OCH_3$, $-CONH_2$, or $-COOCH_3$ and $R_9$ is -H or -Cl, B is a radical of the formula $-NHCONH_2$ or $-NHCOR_3$, $R_3$ being phenyl which is unsubstituted or substituted by one or two chlorine atoms and/or one or two methyl groups or by one methoxy, nitro or acetylamino group, or is 4-pyridyl and the metal is nickel or copper.

6. A process for colouring high-molecular organic material, which comprises using a transition metal complex of the compounds of the formulae I and/or II according to claim 1.

7. High-molecular organic material containing a transition metal complex of the compounds of the formulae I and/or II according to claim 1.

**Revendications**

1. Complexes de métaux de transition qui dérivent de coordinats répondant aux formules I et II :

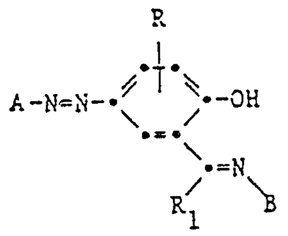

(I)

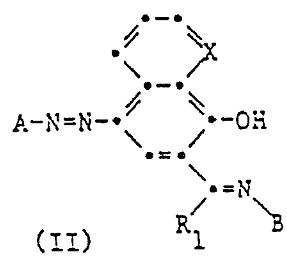

(II) ,

dans lesquelles

- A représente un radical aromatique isocyclique ou hétérocyclique,
- R représente -H, un halogène, un alkyle en $C_1$-$C_4$ ou un alcoxy en $C_1$-$C_4$,
- R1 représente -H, un alkyle en $C_1$-$C_4$ ou un phényle non substitué ou porteur d'un halogène, d'un alkyle en $C_1$-$C_4$, d'un alcoxy en $C_1$-$C_4$, d'un radical $-NO_2$, $-CONH_2$ ou $-CONHR_2$ ou d'un radical N-alkyl-carbamoyle en $C_2$-$C_5$,
- X représente -CH= ou -N= et
- B représentant -H, un alkyle en $C_1$-$C_4$, $-NHCONH_2$, -NHCONH-($C_1$-$C_4$-alkyl), $-NHCONHR_2$, $-NHCSNH_2$, $-NHCSR_3$, $-NHC(NH)NH_2$, $-NHR_2$, $-NHCOR_3$, $-NHSO_2R_3$ ou un radical aromatique hétérocyclique,

  $R_2$ représentant un radical phényle non substitué ou porteur d'un halogène, d'un $-CF_3$, d'un alkyle en $C_1$-$C_4$, d'un alcoxy en $C_1$-$C_4$, d'un $-NO_2$, d'un -CN, d'un $-CONH_2$, d'un $-SO_2NH_2$, d'un -CONH($C_1$-$C_4$-alkyl), d'un $-CONHC_6H_5$, d'un alcoxycarbonyle en $C_2$-$C_5$, d'un phénoxycarbonyle, d'un N-alkylcarbamoyle en $C_2$-$C_5$, d'un $-NHCOC_6H_5$, d'un $-SO_2NH$-($C_1$-$C_4$-alkyl) ou d'un $-SO_2NHC_6H_5$ et

  $R_3$ représentant un radical phényle non substitué ou porteur d'un halogène, d'un alkyle en $C_1$-$C_4$, d'un alcoxy en $C_1$-$C_4$, d'un $-NO_2$, d'un N-alkylcarbamoyle en $C_2$-$C_5$ ou d'un $-NHCOC_6H_5$, ou un radical aromatique hétérocyclique,

  et dans lesquels le métal de transition est un ion métallique portant deux charges positives.

**2.** Complexes de métaux de transition selon la revendication 1, dans lesquels le métal est le nickel, le cuivre, le cobalt ou le zinc.

**3.** Complexes de métaux de transition selon la revendication 1, caractérisés en ce que, dans la formule I, A représente un radical phényle non substitué ou porteur d'un halogène, d'un phényle, d'un phénylazo, d'un carboxy, d'un radical $-CF_3$, $-NO_2$ ou -CN, d'un alkyle en $C_1$-$C_4$, d'un alcoxy en $C_1$-$C_4$ ou d'un radical $-CONH_2$, $-SO_2NH_2$, $-CONHR_4$, $-COOR_5$, $-NHCOR_6$ ou $-SO_2NHR_4$, le symbole $R_4$ représentant un alkyle en $C_1$-$C_4$ ou un phényle non substitué ou porteur d'un halogène, d'un $-CF_3$, d'un alkyle en $C_1$-$C_4$, d'un alcoxy en $C_1$-$C_4$, d'un $-NO_2$, d'un -CN, d'un $-CONH_2$, d'un $-SO_2NH_2$, d'un -CONH($C_1$-$C_4$-alkyl), d'un $-CONHC_6H_5$, d'un alcoxycarbonyle en $C_2$-$C_5$, d'un N-alkylcarbamoyle en $C_2$-$C_5$, d'un $-NHCOC_6H_5$, d'un $-SO_2NH$($C_1$-$C_4$-alkyl) ou d'un $-SO_2NHC_6H_5$, $R_5$ un alkyle en $C_1$-$C_4$, un benzyle non substitué ou porteur d'un halogène ou d'un alkyle en $C_1$-$C_4$, ou un phényle non substitué ou porteur d'un halogène, d'un alkyle en $C_1$-$C_4$, d'un alcoxy en $C_1$-$C_4$, d'un alcoxycarbonyle en $C_2$-$C_5$ ou d'un N-alkylcarbamoyle en $C_2$-$C_5$, et $R_6$ un alkyle en $C_1$-$C_4$ ou un phényle non substitué ou porteur d'un halogène, d'un alkyle en $C_1$-$C_4$, d'un alcoxy en $C_1$-$C_4$, d'un $-NO_2$ ou d'un N-alkylcarbamoyle en $C_2$-$C_5$, et B, R, $R_1$ et le métal ont les significations indiquées à la revendication 1.

**4.** Complexes de métaux de transition selon la revendication 1, caractérisés en ce que le métal de transition est le nickel ou le cuivre et, dans la formule I :
R représente l'hydrogène,
$R_1$ représente l'hydrogène ou un radical méthyle ou phényle,
A représente un radical répondant à la formule III :

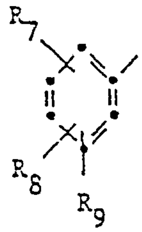

(III)

dans laquelle R7 représente -H, -Cl, $-CH_3$, $-OCH_3$, $-NO_2$, $-CF_3$, -CN, -COOH, $-CONH_2$, $-SO_2NH_2$, $-CONHR_{10}$, $-COOR_{11}$ ou $-NHCOR_{12}$, $R_8$ représente -H, -Cl, $-CH_3$, $-OCH_3$, $-CONH_2$ ou $-COOR_{11}$ et $R_9$ représente -H ou -Cl,

$R_{10}$ représentant un alkyle en $C_1$-$C_4$ ou un phényle non substitué ou porteur d'un substituant pris parmi les suivants : -Cl, $-CF_3$, $-CH_3$, $-OCH_3$, $-NO_2$, -CN, $-CONH_2$, $-SO_2NH_2$, $-CONH(C_1$-$C_4$-alkyl), $-CONHC_6H_5$, alcoxycarbonyles en $C_2$-$C_5$, N-alkyl-carbamoyles en $C_2$-$C_5$, $-NHCOC_6H_5$, $-SO_2NHC_6H_5$ et $-SO_2NH(C_1$-$C_4$-alkyl), $R_{11}$ représentant un alkyle en $C_1$-$C_4$, un benzyle, ou un phényle non substitué ou porteur d'un substituant pris parmi les suivants : -Cl, $-CH_3$, $-OCH_3$, alcoxycarbonyles en $C_2$-$C_5$ et N-alkylcarbamoyles en $C_2$-$C_5$ et $R_{12}$ représentant $-CH_3$ ou un phényle non substitué ou porteur d'un -Cl, d'un $-CH_3$, d'un $-OCH_3$, d'un $-NO_2$ ou d'un N-alkyl-carbamoyles en $C_2$-$C_5$, et

B représente -H, $-NHCONH_2$, $-NHCONHR_2$, $-NHCSNH_2$, $-NHC(NH)NH_2$, $-NHR_2$ ou $-NHCOR_3$,
$R_2$ représentant un phényle non substitué ou porteur d'un -Cl, d'un $-CF_3$, d'un alkyle en $C_1$-$C_4$, d'un alcoxy en $C_1$-$C_4$, d'un $-NO_2$, d'un -CN, d'un $-CONH_2$, d'un $-SO_2NH_2$, d'un $-CONH(C_1$-$C_4$-alkyl), d'un $-CONHC_6H_5$, d'un alcoxycarbonyle en $C_2$-$C_5$, d'un phénoxycarbonyle, d'un N-alkylcarbamoyle en $C_2$-$C_5$, d'un $-NHCOC_6H_5$, d'un $-SO_2NH(C_1$-$C_4$– alkyl) ou d'un $-SO_2NHC_6H_5$, et $R_3$ représentant un phényle non substitué ou porteur d'un -Cl, d'un alkyle en $C_1$-$C_4$, d'un alcoxy en $C_1$-$C_4$, d'un $-NO_2$, d'un N-alkylcarbamoyle en $C_2$-$C_5$ ou d'un $-NHCOC_6H_5$, ou représentant un radical aromatique hétérocyclique.

5. Complexes de métaux de transition de formule I selon la revendication 4, complexes dont le métal est le nickel ou le cuivre et qui dérivent de composés de formule I dans lesquels
R représente l'hydogène,
$R_1$ représente l'hydogène ou $-CH_3$,
A représente un radical de formule III dans lequel $R_7$ représente -H, -Cl, $-CH_3$, $-OCH_3$, $-NO_2$, -CN, $-CF_3$, -COOH, $-COOCH_3$, $-CONH_2$, $-CONHC_6H_5$, $-NHCOCH_3$ ou $-NHCOC_6H_5$, $R_8$ représente -H, -Cl, $-CH_3$, $-OCH_3$, $-CONH_2$ ou $-COOCH_3$, et $R_9$ représente -H ou -Cl,
B représente un radical de formule $-NHCONH_2$ ou $-NHCOR_3$, le symbole $R_3$ représentant un phényle non substitué ou porteur d'un ou de deux atomes de chlore et/ou d'un ou de deux radicaux méthyles, ou d'un radical méthoxy, nitro ou acétylamino, ou représentant un radical pyridyle-4.

6. Procédé pour teindre des matières organiques macromoléculaires, procédé caractérisé en ce qu on utilise un complexe d'un métal de transition dérivant de composés de formules I et/ou II selon la revendication 1.

7. Matières organiques macromoléculaires contenant un complexe d'un métal de transition dérivant de composés de formules I et/ou II selon la revendication 1.